# EUROPEAN PATENT APPLICATION

(11) **EP 4 703 171 A1**
(43) Date of publication of application: **04.03.2026**
(21) Application number: 25198773.1
(22) Date of filing: 28.08.2025
(51) Int. Cl.: B60K 15/00, B60K 15/03, B60K 15/07

(54) **TRUCK WITH A VESSEL MOUNT STRUCTURE FOR SUSPENDING A PRESSURIZED FUEL TANK**

(30) Priority: 30.08.2024 NL 2038538
(71) Applicant: DAF Trucks N.V., 5643 TW Eindhoven (NL)
(72) Inventor: VAN DER KNAAP, Albertus Clemens Maria, 5643 TW Eindhoven (NL); SCHELLEKENS, Josephus Cornelis Maria, 5643 TW Eindhoven (NL); WEIJENBORG, Bernardus Johannes Maria, 5643 TW Eindhoven (NL); PIROS, Zoltán, 5643 TW Eindhoven (NL)
(74) Representative: V.O.

(57) **Abstract**

A truck comprising a vessel mount structure providing at least one neck mount that suspends an elongated pressure vessel to the chassis. A support arm is coupled to the or each neck mount by a deformable coupling arrangement comprising one or more guide arms arranged for guiding a movement of the neck mount along a guided path that is bounded by an end stop provided on the chassis. The end stop comprises a convex contact surface for abutting a cylindrical body of the elongated pressure vessel in case of an impact.

## Description

The invention relates to a truck comprising a vessel mount structure for mounting pressurized fuel tanks in general, in particular cylindrical carbon fibre hydrogen vessels that are suited for storing gaseous hydrogen up to pressure levels of 350 to 700 bar or even more.

In Fuel Cell Electric Vehicles (FCEV), the fuel cell unit that generates electric power which is fed to an electro-mechanic motor that drives the wheels may be supplied with a fuel, such as hydrogen, which is stored in pressurized fuel tanks mounted on board of the vehicle. Alternatively, in vehicles that are propelled by a Hydrogen Internal Combustion Engine (H2-ICE) directly driving the wheels via a propeller shaft, the same on-board hydrogen storage with pressurized fuel tanks is needed. Such pressurized fuel tanks are typically big and heavy and may accordingly for packaging reasons need to be located in a position on the FCEV or H2-ICE vehicle where, in case of a collision with another vehicle or object, the likelihood of an impact is relatively high. For example, the pressurized fuel tanks may be mounted on a lateral side of the chassis where they may be exposed to side impact forces during an accident, being referred to as a so-called side impact collision with a vehicle that runs in from the side, more or less perpendicular to the longitudinal axis of the chassis.

For this reason, safety regulations such as R134 stipulate on these specific safety related accidents, by defining the provisions for approval of motor vehicles and their components with regard to safety related performance of hydrogen-fueled vehicles, particularly when the vulnerable hydrogen control valves that are part of the tank system, being mounted at axial ends of the cylindrical vessels, are positioned in one of the side regions of 200 mm measured from the outermost vertical lateral edges of the vehicle. Such provisions for example specify that damage to a chassis mounted fuel tank, e.g. due to a side impact, may not cause an unacceptable hazard. Specific requirement is that after such a side impact accident the pressurized hydrogen fuel tanks must stay connected to the vehicle structure and the complete hydrogen storage system, including all interconnecting pipework and valve systems, may be dislocated but remain leakage-free intact (no substantial leakage of hydrogen to the environment allowed).

To avoid rupture of the tank, it is recommended to avoid high peak forces being exerted on the chassis mounted tanks, in particular when the mounting structure is based on a so-called neck mount configuration. For example, high (radial) forces acting on the relatively weak boss ends of the tank may cause breaking out of the tank's (carbon fibre based) encapsulation material that maintains the shape of the pressurized fuel tank. For this reason, most tank suppliers advise to mount the tank to the chassis by a set of straps that clamp the tank around its robust cylindrical belly, the so-called "strap mounting", advantageously avoiding a collision load path via the relatively vulnerable metal boss end inserts in the spherical axial ends of the hydrogen vessels in case of a side impact crash from other vehicles.

However, the downside of such a strap mounting is that the tanks are mounted in an over-constrained fashion. That is, radial expansion of the tank ("breathing"), e.g. under impact of varying internal pressure, is constrained by the strap mounting, as well as torsional flex modes. Hence, during normal driving and operating conditions of the truck, such an over-constrained strap mounting may create internal stresses or friction between the tank and the mounts, which can lead to damage and may even cause the cylindrical tanks to slowly crawl away in longitudinal direction as a result of rotational micro-motions (like pulling a cork out of a wine bottle with a corkscrew) that are continuously induced by small chassis torsional deformation angles (related to driving over road irregularities) of the fairly weak ladder frame as typically applied in commercial vehicles. A further disadvantage of strap mounting is that this fixation means consumes precious radial space that is limited by road clearance restraints and maximum chassis height. This reduces the maximum diameter of the pressurized tanks that can be installed at the sides of the chassis and thus less hydrogen can be stored in these strap mounted tanks, negatively affecting the driving range of these hydrogen vehicles.

To mitigate these problems, it is known to suspend the pressurized tank at its axial ends only, sometimes referred to as a "neck mounting." Depending on the structure and combination of the opposing neck mounts at the tank's axial ends, this can provide a non-overconstrained suspension. However, since the axial ends are relatively fragile compared to the body of
the tank, a neck mounting may be problematic in case of a crash, where an impact force on the tank is to be transferred to the chassis via the neck mounts. In view of the safety regulations, it is important that the force on the axial ends is controlled such that the tank remains intact at all times.

It is an object of the present invention to provide a chassis mounting arrangement for a pressurized fuel tank that is safe, durable and reliable both during normal driving/operating conditions as well as during a collision.

### SUMMARY

In summary, aspects of the invention relate to a truck as defined in the appended claims. The truck comprises a vessel mount structure that extends from a chassis of the truck and that provides at least one neck mount that is mounted to an axial end of an elongated pressure vessel for thereby suspending the elongated pressure vessel to the chassis.

A support arm extends laterally from the or each neck mount towards the chassis. Each support arm is coupled to the respective neck mount by a coupling arrangement. At least one of said coupling arrangements is deformable in the lateral direction towards the vehicle.

The at least one deformable coupling arrangement comprises one or more guide members arranged for guiding a movement of the neck mount relative to the support arm on a guided path that is bounded by an end stop. The end stop is provided on the chassis and spaced from the elongated pressure vessel, e.g. at a longitudinal location that corresponds to the robust cylindrical section of the carbon fiber tank body (slightly spaced away from the spherical dome ends). The end stop comprises a convex contact surface that is curved in a downward direction and arranged for abutting a cylindrical body of the elongated pressure vessel, in case of an impact on the elongated pressure vessel.

During a side impact crash on the elongated pressure vessel, the initial impact causes a primary peak force on the neck mounts. The primary peak force is limited, i.e. partially absorbed, by the one or more guide members of the coupling arrangement guiding the neck mount on the guided path towards the end stop. Preferably, the one or more guide members guide the neck mount while maintaining the mechanical connection during the crash.

The impact of the cylindrical body of the elongated pressure vessel against the end stop at the end of the guided path may create parasitic loads between the end stop and the vessel body, other than in the direction of the guided path towards the end stop. Since the coupling arrangement may be compliant in the direction of the guided path yet stiffer in other directions, parasitic loads result in a secondary peak force on the neck mount.

The present invention solves this by having an end stop with a convex contact surface. The one or more guide members of the at least one coupling arrangement guide the neck mount over a guided path, e.g. in a substantially lateral direction, towards the end stop on the chassis. The one or more guide members can e.g. be formed by leg(s) that extend downward from a lateral support arm toward the neck mount. Alternatively, the one or more guide members can be an integral part of a neck mount with a flex plate assembly that is designed to deform under crash load to guide the axial end of the pressure vessel towards the end stop over a guided path. It may be understood by the skilled person that within the scope of the claims, other types of structural arrangements or mechanisms can be envisioned that hold the axial end of the elongate pressure vessel in position during normal operation of the truck, and guides the axial end toward the chassis over a predefined, controlled guided path during a crash.

The convex contact surface of the end stop is curved in a downward direction, in that the contact surface bulges out between a top and bottom edge of the end stop. The convex geometry keeps the point of contact between the end stop and the cylindrical body of the elongated pressure vessel at the same location, i.e. with almost no vertical displacement, during a side impact crash. As a result, due to the absence of a vertical reaction force component in the end stop contact point, minimum parasitic forces occur on the neck mount.

Compared to conventional end stops with a concave or substantially flat contact surface, the secondary peak force on the neck mount can be significantly reduced, e.g. by up to 60%. This is because known concave or flat end stops typically create a dynamically changing contact force resultant on the cylindrical vessel body with a vertical, downward component, that pushes the elongated pressure vessel downward in the stiff direction of the coupling at the neck mounts. Due to the deformation of the chassis under impact of the pressure vessel against the end stop, crash side impact forces make the end stop structure rotate inwards to the chassis.

At least one axial end of the elongate pressure vessel is suspended by a neck mount that, via the deformable coupling arrangement, is coupled to a support arm that extends from the chassis. The other end of the pressure vessel may be suspended by a further neck mount, in which case the further neck mount is preferably coupled to a support arm via a further deformable coupling arrangement, e.g. similar to the deformable coupling arrangement described herein. E.g. at least one, or both of the neck mounts may comprise a deformable coupling arrangement comprising an assembly with two leg members that extend downward from the support arm and are spaced apart in lateral direction and that interconnect the neck mount to the support arm via a so-called "four bar mechanism" or "parallelogram construction" to guide the neck mount to the chassis via a predetermined path, or guided path, once the coupling arrangement deforms under side impact from a vehicle or object into the chassis sided tank. Alternatively, the one or more coupling arrangements may be based on a flex plate assembly, e.g. comprising one or more flex plates, that are flexible in out-of-plane directions and rigid in at least two in-plane directions, and that hold the pressure vessel in position while allowing axial and radial expansion of the vessel due to internal pressure variations. The flex plate assembly e.g. comprises a stack of multiple flex plates. A neck mount that comprises a flex plate assembly at one axial end of the pressure vessel can e.g. be favourably combined with a ball joint or cardanic coupling at the other axial end via a coupling arrangement according to aforementioned "parallelogram construction", to form a non-overconstrained suspension. The parallelogram construction is preferably construed such that it has a high bending stiffness in out-of-plane bending direction with the objective to tightly fixate the chassis sided tank in longitudinal direction of the truck whilst the flex plate assembly at the other end absorbs pressure dependent tank expansions and misalignments of the tank relative to the truck chassis. Alternatively, the pressure vessel may be suspended by a neck mount at one axial end, combined with any other type of further suspension arrangement to suspend the remaining part of the pressure vessel, such as a strap mount around the cylindrical body of the vessel, or a clamping arrangement that may be slidable in longitudinal direction of the tank.

The proposed convex end stop is able to breath backwards into the chassis when the vessel hits the end stop and simultaneously unroll over the circular cross sectional surface of the relative stiff carbon fiber body of the cylindrical elongated pressure vessel whilst keeping the point of contact at more or less the same vertical position. Preferably, to further optimize this favourable mechanism of mitigating parasitic forces into the stiff direction of the coupling, the convex contact surface comprises an upper arced section that faces laterally outward and upward, and that is arranged for abutting a lower half of the cylindrical body of the elongated pressure vessel.

For example, in some embodiments the convex contact surface is arranged to abut the elongated pressure vessel 10-40 millimeters below a centerline of the elongated pressure vessel, e.g. about 20-30 millimeters below the centerline. In other words, during an impact the force resultant as seen from the contact point on the convex contact surface has a lateral component and an upward component. Preferably, the force resultant intersects the axial centerline of the elongated pressure vessel.

During a crash, the elongated pressure vessel may approach the end stop at a yaw angle, e.g. because the primary impact on the elongated pressure vessel is closer to one of its axial ends, or because the primary impact is at an angle. As a result, the elongated pressure vessel may contact an edge of the end stop first, causing an increased contact pressure and high local material stress of the carbon fiber structure of the pressure vessel (risk on damage of the cylindrical tank body). In order to avoid that in such cases the end stop excessively loads one of the neck mounts or damages the cylindrical vessel body, the convex contact surface may additionally be curved in a longitudinal driving direction of the truck. For example, the contact surface may bulge out between a front edge of the end stop that is closest to the front axle of the truck and a rear edge that is closest to the rear axle of the truck. Additionally, or alternatively, one or more edges or corners of the convex contact surface may be rounded or chamfered, e.g. a front edge, rear edge, top edge and/or bottom edge.

More generally, the convex contact surface of the present invention may be formed by a protrusion of the end stop that extends laterally outward from the chassis. The convex contact surface may have a radius of curvature between 1 and 500 centimeter in at least one direction of curvature. The radius of curvature may be variable, e.g. between opposing edges of the protrusion. For example, the convex contact surface can have a radius of curvature that increases from a middle section of the protrusion towards an edge of the protrusion, like an upper, lower front or rear edge. In other words, near the edges the contact surface may be flatter than at the center of the protrusion.

Preferably, the convex contact surface has a radius of curvature that corresponds with a radius of curvature of the cylindrical body section of the elongate pressure vessel within a range of +/- 10%. In other words, the radius of curvature may be about the same. Preferably, this is at least the case at the point of contact between the end stop and the elongated pressure vessel.

In an initial position of the elongated pressure vessel, i.e. pre-crash, a gap of 10-30 millimeters is preferably provided between the convex contact surface and the cylindrical body of the elongated pressure vessel. This gap provides sufficient clearance for the guide members of the coupling arrangement to guide the neck mount on the guided path and absorb a part of the primary impact force before the vessel body impacts the end stop. Moreover this setup provides for sufficient clearance between the vessel and the chassis sided end stop to avoid undesired contact during normal operation of vehicle (tank vibrations) and compensate of in-vehicle assembly tolerances.

In some embodiments, the end stop comprises a tab that extends downward from the chassis in a cantilevered fashion, and the convex contact surface is provided on the tab. Because of the cantilevered design, the tab is relatively compliant in the lateral direction, thus providing a "soft" end stop able to deform laterally inward, e.g. underneath the chassis, to absorb the impact energy over an increased distance.

Preferably, the one or more guide members of the coupling arrangement are arranged for guiding the neck mounts on the guided path over a stroke that is larger than the spacing, or gap, between the cylindrical body of the elongated pressure vessel and the convex contact surface. In this way it is ensured that the relatively robust cylindrical body of the elongated pressure vessel impacts the end stop first, i.e. before the neck mounts are halted.

In order to prevent that the neck mounts move under normal operating conditions of the truck, the one or more guide members may form a collapse structure that is collapsible in the lateral direction, wherein the collapse structure is arranged for collapsing when an impact force on the elongated pressure vessel exceeds a collapse threshold. For example, the one or more guide members may be constructed to bend, buckle, fold, crush or break free when a force on the neck mount exceeds a threshold force, or collapse threshold. The collapse threshold is preferably representative of a force that is not expected to occur during normal operating conditions but only during a crash, e.g. a force more than 40 kN. Preferably, for a given type of pressure vessel, the one or more guide arms are designed such that the threshold force is lower than the maximum allowable force, or torque related to a lateral impact below or above the centerline of the pressure vessel, on the axial ends of the elongated pressure vessel, to avoid rupture and other sorts of damage of the vessel.

In order to control the movement direction and orientation of the neck mount, thus control the force on the vessel's axial ends, the coupling arrangement may comprise a pair of guide members for guiding the neck mount on the guided path, wherein each guide member extends separately from the other guide member between the neck mount and the support arm, for thereby forming a four-bar mechanism. Thus, the neck mount is mounted between the guide members at a distance from the support arm. The free section of the guide members between the neck mount and the support arm is able to deform laterally under load, e.g. by bending and/or buckling. Preferably, the guide members are more rigid in other directions, such as in the vertical direction and/or the driving direction of the truck. In one exemplary embodiment the pair of guide members form a parallelogram mechanism, wherein the guide members are parallel to each other and are of equal length.

In some embodiments, the coupling arrangement comprises a pair of guide members that are spaced apart and separately extend downward from the support arm toward the neck mount, wherein each guide member is formed by a beam with a U-profile, and wherein respective openings of the U-profiles face each other. The U-shaped guide members can be manufactured from folded plate material, or may be extruded parts. The neck mount is preferably mounted in the opposing openings of the guide members, so that the neck mount partially extends into the U-shaped profiles. U-profile guide arms are a relatively simple and light-weight solution for providing a stiff connection between the neck mount and the support arm, in particular in the vertical direction (i.e. along the length of the guide arm), while the U-profile can buckle or collapse in the lateral direction (i.e. transverse to the length of the guide arm) to guide the neck mount towards the end stop.

### BRIEF DESCRIPTION OF THE DRAWINGS

The invention will be further elucidated in the figures:
FIG 1 illustrates an embodiment of a truck comprising elongated pressure vessels for storing pressurized fuel at the chassis sides;
FIG 2 illustrates another embodiment of the truck, including a vessel mount structure for mounting the elongated pressure vessels via their axial ends to a chassis of the truck;
FIG 3 provides a detailed view of an embodiment of the vessel mount structure, in particular comprising a parallelogram mechanism and a convex end stop;
FIG 4 illustrates a detailed exploded view of another or further embodiment of the parallelogram mechanism based vessel mount structure;
FIG 5 shows another or further embodiment of the vessel mount structure, having an end stop with a convex contact surface;
FIG 6 illustrates an embodiment of the end stop in more detail, in particular its position and geometry relative to the elongated pressure vessel.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

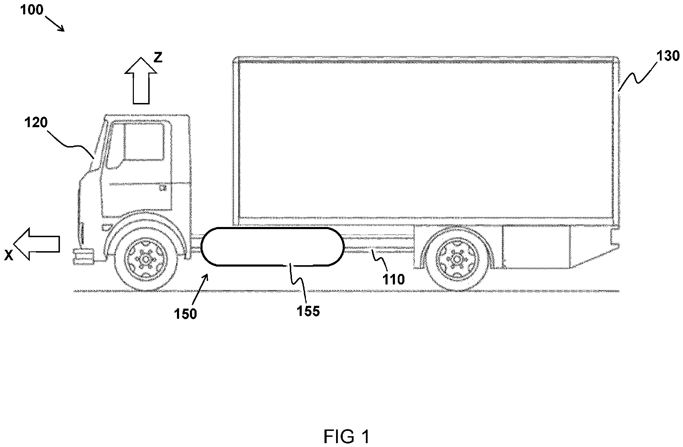

FIG. 1 illustrates a truck 100, such as a tractor unit of a tractor semi-trailer combination, or a box truck, preferably a Fuel Cell Electric Vehicle (FCEV) powered by a (hydrogen) fuel cell unit or a vehicle powered by a Hydrogen Internal Combustion Engine (H2-ICE). Mounted to a chassis 110 of the truck 100 is a pressurized fuel storage 150 comprising one or more pressurized fuel tanks 155 for storing pressurized fuel, such as hydrogen. Preferably, the pressurized fuel tanks 155 are elongated pressure vessels. Such elongated pressure vessels may have a cylindrical body section between opposing spherical axial ends. Each axial end may be provided with a boss insert, which forms an inlet or outlet of the elongated pressure vessel, e.g. for connecting to a fuel supply line. A valve system may be provided at each axial end, e.g. integral to the boss insert, to regulate a flow of fuel into or out of the elongated pressure vessel and protect the vessel against temperature and pressure overloads. Hence, the axial ends of the pressurized fuel tank are relatively fragile compared to the thick cylindrical (carbon fibre) body section of the tank.

The pressurized fuel storage 150 can e.g. be arranged on one or both lateral sides of the chassis 110, such that the elongated pressure vessels 155 are located between the front and rear axle of the truck, the elongated pressure vessels oriented along a longitudinal direction X, e.g. the forward driving direction of the truck. For example, the pressure vessel(s) 155 may be located behind and/or partially below the cabin 120 of the truck, e.g. below the cargo box 130 or a trailer that is coupled to a fifth wheel of a tractor.

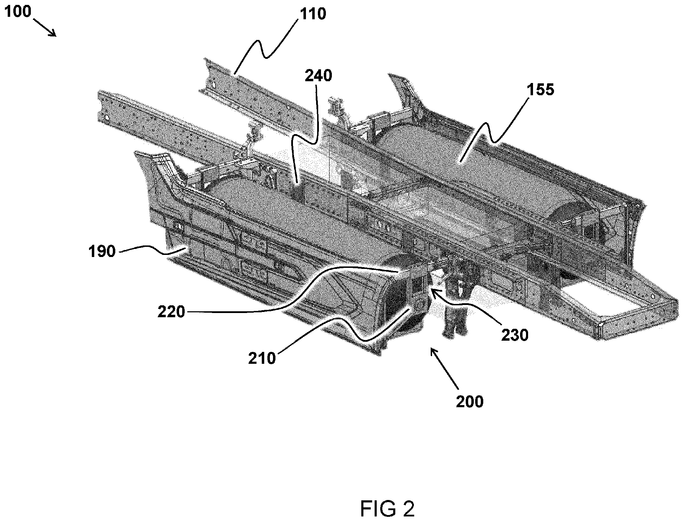

As illustrated in FIG. 2, the truck 100 comprises a vessel mount structure 200 that extends from a chassis 110 of the truck, for suspending pressurized fuel tanks 155 to the chassis. The vessel mount structure 200 provides neck mounts 210 that are mounted to the opposing axial ends of the elongated pressure vessel 155 for suspending the elongated pressure vessel to the chassis. The vessel mount structure 200 comprises a pair of support arms 220, each support arm extending laterally from a respective neck mount 210 towards the chassis 110. Additionally one or more chassis end stops 240 may be attached to the longitudinal U-members of the ladder frame based chassis 110 at a position near, but laterally distanced away from the cylindrical section of the elongate pressure vessel 155. An optional side skirt 190 is mounted to the vessel mount structure 200 to cover the elongated pressure vessel 155 and to guide driving wind along the pressurized fuel storage. In the side skirt also steps 195 may be provided to allow persons to safely climb onto the so-called "catwalk" deck of the chassis 110 of a tractor. Hence, the support arms may need to be able to carry an additional load between 100 and 150 kg (e.g. of a person), in addition to carrying the load from the heavy pressure vessels, each typically weighing 300 to 500 kg.

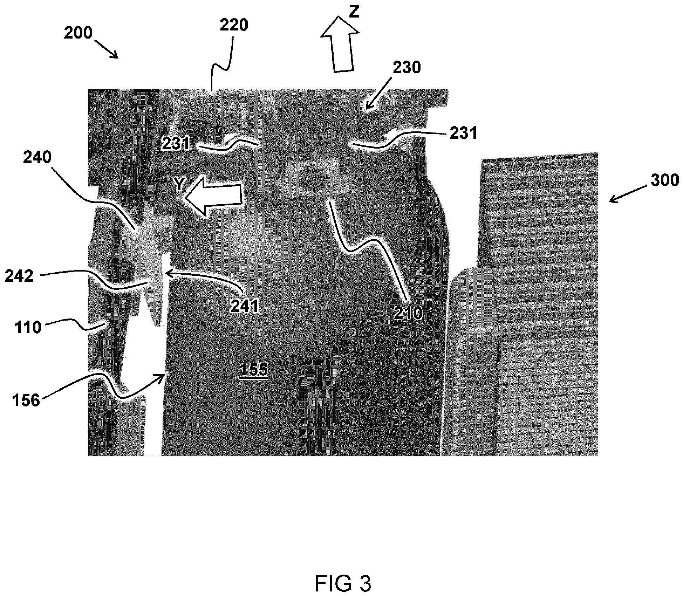

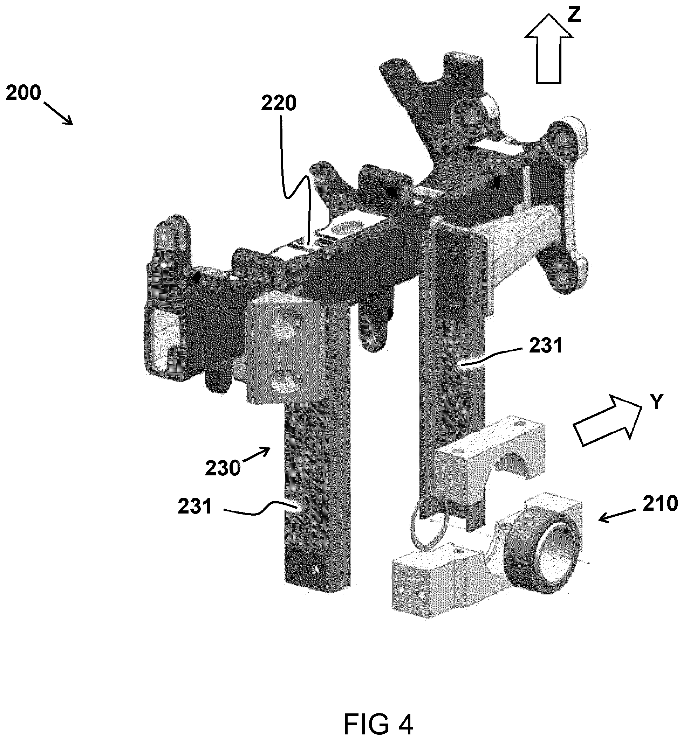

FIGs 3 and 4 illustrate various embodiments of the vessel mount structure 200 in more detail. Each support arm 220 is coupled to the respective neck mount 210 by a coupling arrangement 230, which holds the neck mount 210 in position during normal operating conditions of the truck, and collapses in the lateral direction Y in case of a crash. In this way, the coupling arrangement 230 is deformable in the lateral direction Y for guiding a movement of the neck mount 210 relative to the support arm 220 along a guided path.

For example, the coupling arrangement 230 comprises one or more guide members 231, such as plates or rods, that extend between the neck mount 210 and the support arm 220. In case the coupling 230 comprises only one guide member 231, the thus formed coupling arrangement 230 is arranged for guiding the neck mount 210 along a curved, e.g. circular, path having a radius defined by the axial length of the guide member 231, without constraining an axial rotation of the neck mounts 210, e.g. around a centerline of the elongated pressure vessel 155 with respect to e.g. a horizontal reference plane.

As illustrated in FIGs 3 and 4, instead of a single guide member, the coupling 230 can comprise a pair of guide members 231 extending between the neck mount 210 and the support arm, thereby forming a four-bar mechanism, e.g. a parallelogram mechanism or trapezoid mechanism. The axial lengths and possibly slanted orientations of each link in such a four-bar mechanism can be tuned, in order to guide the neck mount 210 with respect to the support arm 220 along a specific path, while also controlling the orientation of the neck mount 210 with respect to the support arm 220. For example, in a parallelogram mechanism, in which all axial link lengths are equal and its orientations are (vertically) parallel, the neck mount 210 follows a substantially linear (horizontal) trajectory and the orientation of the neck mount is constant during the movement along the path. Conversely, in case of unequal axial link lengths and/or orientations, the trajectory may be curved and the neck mount may also rotate during its movement along the trajectory.

As illustrated in FIG. 4 the coupling arrangement may comprise a pair of guide members 231 that are spaced apart and separately extend downward from the support arm toward the neck mount 230. Each guide member 231 is formed by a beam with a U-profile. The guide members 231 can e.g. be manufactured from folded plate material or by extrusion. The pair of guide members 231 are positioned and oriented with respect to each other such that respective openings of the U-profiles face each other. The neck mount 210 partially extends into the opposing openings, and is fixed to the guide members 231 inside the channel formed between the upstanding walls and base of the U-profile. The U-shaped guide members 231 are particularly rigid in the vertical direction Z of the truck, i.e. along the length of the profile. The guide members 231 each have a free standing section the between the neck mount 210 and the support arm 220 where the guide members are not connected to other parts. This allows the U-shaped guide members 231 to deform, e.g. bend or buckle, in the lateral direction Y under impact from a lateral side collision of e.g. a passenger car 300 (see FIG. 3) running into the suspended chassis sided elongate pressure vessel. The guide members 231 are constructed such that said deformation generally only occurs in case of an impact on the elongated pressure vessel, that is, when the force on the neck mount exceeds a collapse threshold force.

As illustrated in FIG. 4 the pair of guide arms 231 together with the neck mount 210 and support arm 220 can be regarded as a four-bar mechanism; in particular a parallelogram mechanism since the guide arms 231 in FIG. 4 are parallel to each other and the free standing sections are of equal length. Thus, in case of an impact the coupling or coupling arrangement 230 guides the neck mount 210 with respect to the support arm 220 along a guided path, which can be tuned by changing the relative dimensions and/or angle between the guide members 231.

Generally, in accordance with the present invention, to control the position of the neck mount during normal operating conditions and guide the neck mounts 210 along a predefined path in case of an impact on the pressure vessel, the coupling arrangement 230 has a rigidity in the vertical direction Z and is collapsible in the lateral direction Y when a lateral force on the neck mount 210 exceeds a threshold. After the coupling arrangement 230 has collapsed, the guide member(s) 231 preferably provide a degree of freedom in the lateral direction to guide the neck mount towards the chassis.

As depicted in FIG. 3, the coupling arrangement 231 is arranged for guiding the neck mount 210 towards an end stop 240 that is provided on the chassis 110 and spaced from the elongated pressure vessel 155. The end stop 240 is arranged for abutting a cylindrical body section of the elongated pressure vessel 155 between the axial ends. Preferably, a contact surface 241 of the end stop 240 is in line with, e.g. normal to, the predefined trajectory. The contact surface 241 is convex, e.g. curved outward towards the pressure vessel 155. Preferably, the convex contact surface 241 has a radius of curvature that is about equal to a radius of curvature of the cylindrical body section 156 of the elongated pressure vessel 155, to distribute impact energy over the contact surface 241 and reduce peak forces at the pressure vessel 155 and the end stop 240 and naturally unroll over the circular cross-sectional surface 156 of the cylindrical section of the elongate pressure 155 when the end stop is elastically breathing backwards (related to the compliance characteristics of the chassis 110) under impact of the high end stop forces. Furthermore, elastomeric cushion material may be added to the contact surface 241 to dampen the impact of a vessel end stop hit during a side impact collision.

Since the predefined trajectory can be offset from the chassis 110, e.g. passing below the chassis, the contact surface 241 can be provided on a tab 242 that extends from the chassis 110 in the vertical direction Z, e.g. downward, in a cantilevered fashion as indicated in FIG. 3. By providing the tab 242 with a flexibility in the lateral direction Y, along the predefined trajectory, impact energy can be more gently absorbed and controlled by deformation of the tab 242 when the elongated pressure vessel 155 collides into the end stop 240.

In case of an impact on the elongated pressure vessel 155, the coupling arrangement 230 thus guides the elongated pressure vessel 155 along the predefined trajectory towards the end stop 240. The impact causes a deformation of the coupling arrangement 230, which deformation guides the neck mount 210 along a predefined path while absorbing a part of the impact energy. This reduces a peak force on the neck mount 210, e.g. in case of a collision. After having moved a certain distance along the guided path, the elongated pressure vessel's cylindrical body section 156 collides into the end stop 240, and the remaining part of the impact energy is absorbed by the end stop 240 and the cylindrical body section 156 of the pressure vessel, thereby further mitigating the amount of impact energy exerted on the neck mounts 210.

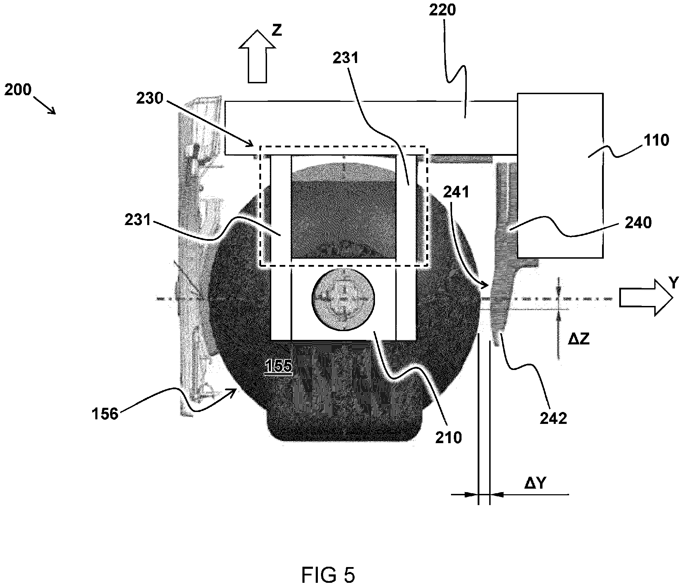

FIG. 5 illustrates another or further embodiment of the vessel mount structure 200. In an initial position, e.g. before a crash, a gap ΔY of 10-30 millimeters may be provided between the convex contact surface 241 of end stop 240 and the cylindrical body 156 of the elongated pressure vessel 155. It is preferable that the coupling arrangement 230 is arranged for guiding the neck mounts 210 along the guided path over a stroke that is larger than a lateral spacing, gap ΔY, between the elongated pressure vessel 155 and the end stop 240, to ensure that the impact energy is absorbed by the end stop 240 and the cylindrical body 156 of the pressure vessel, instead of by the neck mount 210.

As illustrated, the center of curvature of the convex contact surface 241 of end stop 240 is positioned a height offset ΔZ below the axial centerline of the elongated pressure vessel 155. In other words, the most outward point or apex of the convex contact surface 241 of end stop 240 that is directed in the lateral direction -Y is located below the axial centerline of the pressure vessel 155. Preferably the convex contact surface 241 is arranged to abut the elongated pressure vessel 10-40 millimeters below the centerline of the elongated pressure vessel. Hence, during a crash the lower half of the cylindrical body 156 of the elongated pressure vessel 155 abuts an upper arced section 243 of the convex contact surface 241, above the apex. The upper arced section 243 faces laterally outward and slightly upward due to the curvature facilitating natural unrolling of the convex contact surface 241 over the cylindrical body 156 of the elongate pressure whilst keeping the point of contact at substantially constant vertical position Z during the whole impact chassis 110 an tab 242 deformation process until the chassis tank has come to a standstill.

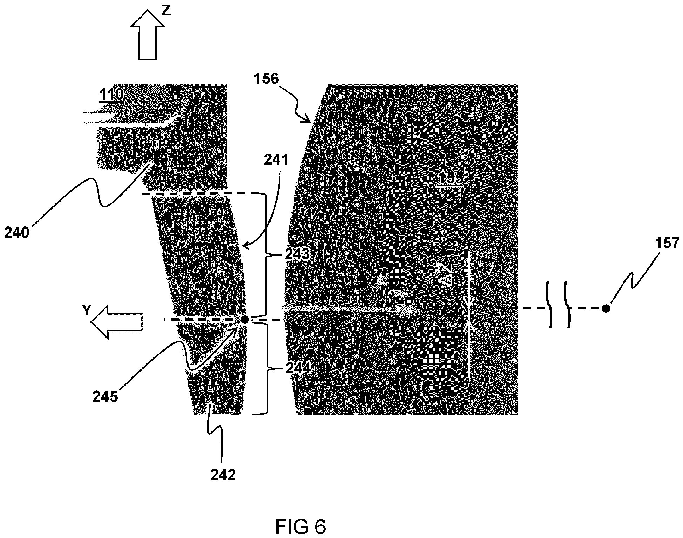

FIG. 6 illustrates the relative position of the end stop 240 with respect to the elongated pressure vessel 155 in more detail. In general terms the convex contact surface 241 is formed by a protrusion of the end stop 240 that extends laterally outward from the chassis 110. The radius of curvature of the convex contact surface 241 can be any value, e.g. between 1 and 500 centimeter. Preferably, the radius of curvature of the convex contact surface 241 is about the same as the radius of curvature of the cylindrical body 156 of the elongated pressure, e.g. within +/- 10%. The radius of curvature may vary across the convex contact surface 241. For example, the radius of curvature may increase from a middle section of the convex contact surface towards an upper and/or lower edge of the convex contact surface. In other words, the contact surface 241 may be flatter near its edges and more curved at the apex 245.

In FIG. 6 it is shown that the convex contact surface 241 is curved in the vertical direction Z. In other words, the principal curvature lies on the Y-Z plane, and extends substantially downward in the -Z direction and bulges out in the -Y direction. The apex 245 of the curve can be defined as the point where the convex contact surface 241 is farthest away from the chassis 110 in the -Y direction. The convex contact surface 241 can be divided into an upper arced section 243 above the apex 245 in the Z-direction and a lower arced section 244 below the apex 245. In other words, starting from the apex 245 the upper arced section 243 extends upward in the Z-direction and retracts towards the chassis 110 in the lateral direction Y. The upper arced section 243 thus faces laterally outward and upward. Conversely, starting from the apex 245 the lower arced section 244 extends downward in the -Z direction and retracts in the lateral direction Y towards the chassis 110. Hence, the lower arced section 244 faces laterally outward and downward. Preferably, in order to minimize parasitic force during a crash, the apex 245 is located at a height in the Z-direction just below the height of the centerline 157 of the elongated pressure vessel 155. Accordingly, during a crash the cylindrical body 156 of the elongated pressure vessel abuts the upper arced section 243 of the convex contact surface 241 first. Subsequently, as a result of the impact the end stop 240 deforms in the lateral direction Y, e.g. inward and underneath the chassis 110, to absorb a portion of the impact energy, which deformation is facilitated by the convex contact surface 241 being provided on a tab 242 that extends downward from the chassis 110 in a cantilevered fashion. Hence the angle of attack between the elongated pressure vessel 155 and the contact surface of the end stop may change during an impact. With a conventional concave or substantially flat contact surface, this change in angle of attack causes an additional force component, or parasitic force, in the downward direction -Z on the elongated pressure vessel 155 and thus also on the neck mount. The present invention solves this by having an end stop with a convex contact surface. Because of the convex geometry, and further enhanced by the slightly vertically offset position ΔZ of the apex 245, during a crash and while the end stop 240 deforms inward, the force resultant F_{RES} remains directed substantially in the Y-direction, e.g. on a horizontal plane, towards the centerline 157 of the elongated pressure vessel, with a minimal upward (+Z) or downward force (-Z) component.

The convex contact surface 241 may additionally be curved in other directions, such as the longitudinal driving direction of the truck. Also, edges of the convex contact surface may be rounded or chamfered, to prevent large contact pressures and high local material stresses in the contact area of the carbon fiber body of the pressure vessel when the elongated pressure vessel 155 impacts the end stop 240 at a small yaw angle about the vertical Z direction.

As illustrated, the apex 245 of the convex contact surface 241 is located a height offset ΔZ, e.g. 10-30 millimeter, below the axial centerline 157 of the elongated pressure vessel 155. As a result, the force resultant F_{RES} is substantially directed towards the centerline 157, thus counteracting the lateral impact with minimal parasitic forces. It will be clear for the skilled engineer that the behavior of the setup described herein can be tuned without deviating from the scope of the invention as defined by the claims, to aim for a minimum parasitic force component of the end stop in the stiff direction of the neck mount coupling arrangement 230 by a variety of design parameters, such as end stop curvature shape, apex position ΔZ, tab length, chassis stiffness, vessel diameter, parallelogram geometry, vessel offset ΔY, and more. Also, the dependency of the local indent deformation behavior of the carbon fiber structure (compliance) of the cylindrical body when the end stop 240 protrudes into the pressure vessel can be taken into account.

The invention applies not only to commercial vehicle applications where the pressurized fuel tank mounting arrangement described herein reduces a peak load on the neck mounts in case of a collision, but also to other technical, agricultural or industrial applications where the integrity and safety of a suspended component may be compromised due to an impact. It will be clear to the skilled person that the invention is not limited to any embodiment herein described and that modifications are possible which may be considered within the scope of the appended claims. Also kinematic inversions are considered inherently disclosed and can be within the scope of the invention. In the claims, any reference signs shall not be construed as limiting the claim.

The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality. Features that are not specifically or explicitly described or claimed may additionally be included in the structure of the invention without departing from its scope.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such. Additions, deletions, and modifications within the purview of the skilled person may generally be made without departing from the scope of the invention, as determined by the claims.

## Claims

1. A truck, comprising a vessel mount structure extending from a chassis of the truck, the vessel mount structure providing at least one neck mount that is mounted to an axial end of an elongated pressure vessel for thereby suspending the elongated pressure vessel to the chassis, wherein a support arm extends laterally from the or each neck mount towards the chassis, wherein the or each support arm is coupled to the respective neck mount by a coupling arrangement, wherein at least one of said coupling arrangements is deformable in the lateral direction towards the vehicle, wherein the at least one deformable coupling arrangement comprises one or more guide members arranged for guiding a movement of the neck mount relative to the support arm on a guided path that is bounded by an end stop, wherein the end stop is provided on the chassis and spaced from the elongated pressure vessel, wherein the end stop comprises a convex contact surface that is curved in a downward direction and arranged for abutting a cylindrical body of the elongated pressure vessel, in case of an impact on the elongated pressure vessel.

2. The truck according to claim 1, wherein the convex contact surface comprises an upper arced section that faces laterally outward and upward, and that is arranged for abutting a lower half of the cylindrical body of the elongated pressure vessel.

3. The truck according to any preceding claim, wherein the convex contact surface is arranged to abut the elongated pressure vessel 10-40 millimeters below a centerline of the elongated pressure vessel.

4. The truck according to any preceding claim, wherein the convex contact surface is additionally curved in a longitudinal driving direction of the truck.

5. The truck according to any preceding claim, wherein edges of the convex contact surface are rounded.

6. The truck according to any preceding claim, wherein the convex contact surface is provided on a tab that extends downward from the chassis in a cantilevered fashion.

7. The truck according to any preceding claim, wherein the convex contact surface is formed by a protrusion of the end stop that extends laterally outward from the chassis, wherein the convex contact surface has a radius of curvature between 1 and 500 centimeter.

8. The truck according to any preceding claim, wherein the convex contact surface has a radius of curvature that increases from a middle section of the convex contact surface towards an upper and/or lower edge of the convex contact surface.

9. The truck according to any preceding claim, wherein the convex contact surface has a radius of curvature that corresponds with a radius of curvature of the cylindrical body section of the elongate pressure vessel within a range of +/- 10%.

10. The truck according to any preceding claim, wherein, in an initial position, a gap of 10-30 millimeters is provided between the convex contact surface and the cylindrical body of the elongated pressure vessel.

11. The truck according to any preceding claim, wherein the coupling arrangement comprises a pair of guide members for guiding the neck mount on the guided path, each guide member extending separately from the other guide member between the neck mount and the support arm, for thereby forming a four-bar mechanism.

12. The truck according to claim 11, wherein the pair of guide members form a parallelogram mechanism, wherein the guide members are parallel to each other and are of equal length.

13. The truck according to any preceding claim, wherein the one or more guide members are arranged for guiding the neck mounts on the guided path over a stroke that is larger than a spacing between the cylindrical body of the elongated pressure vessel and the convex contact surface.

14. The truck according to any preceding claim, wherein the one or more guide members form a collapse structure that is collapsible in the lateral direction, wherein the collapse structure is arranged for collapsing when an impact force on the elongated pressure vessel exceeds a collapse threshold.

15. The truck according to any preceding claim, wherein the coupling arrangement comprises a pair of guide members that are spaced apart and separately extend downward from the support arm toward the neck mount, wherein each guide member is formed by a beam with a U-profile, and wherein respective openings of the U-profiles face each other.
